Europäisches Patentamt

European Patent Office

Office européen des brevets

(19)

(11) Veröffentlichungsnummer: **0 182 134 B1**

(12) **EUROPÄISCHE PATENTSCHRIFT**

(45) Veröffentlichungstag der Patentschrift: **05.02.92**

(51) Int. Cl.⁵: **G06F 11/00**

(21) Anmeldenummer: **85113416.3**

(22) Anmeldetag: **22.10.85**

(54) **Verfahren zum Betrieb eines signaltechnisch sicheren Mehrrechnersystems mit mehreren signaltechnisch nicht sicheren Ein/Ausgabebaugruppen.**

(30) Priorität: **20.11.84 DE 3442418**

(43) Veröffentlichungstag der Anmeldung:
**28.05.86 Patentblatt 86/22**

(45) Bekanntmachung des Hinweises auf die
Patenterteilung:
**05.02.92 Patentblatt 92/06**

(84) Benannte Vertragsstaaten:
**AT CH DE LI NL**

(56) Entgegenhaltungen:
**EP-A- 0 006 310**
**DE-A- 2 609 107**
**FR-A- 2 371 017**
**GB-A- 2 159 988**

(73) Patentinhaber: **SIEMENS AKTIENGESELL-SCHAFT**
**Wittelsbacherplatz 2**
**W-8000 München 2(DE)**

(72) Erfinder: **Lohmann, Heinz-Jürgen, Dr.-Ing.**
**Erftstrasse 10**
**W-3300 Braunschweig(DE)**
Erfinder: **Günther, Rudolf, Dipl.-Ing.**
**Ackerweg 25**
**W-3300 Braunschweig(DE)**

## Beschreibung

Die Erfindung bezieht sich auf ein Verfahren zum Betrieb eines signaltechnisch sicheren Mehrrechnersystems mit mindestens zwei signaltechnisch nicht sicheren Ein/Ausgabebaugruppen, über die die Rechner des Mehrrechnersystems mindestens zweikanalig Datentelegramme von und/oder zu anderen Rechnern und/oder sonstigen Daten aufnehmenden, abgebenden oder verarbeitenden Systemen, übertragen und über die sie von dort in Form von inhaltlich übereinstimmenden Telegrammen für die Ein/Ausgabebaugruppen durch Prüfdaten gesicherte Nutzdaten empfangen bzw. nach dort abgeben.

Für besonders sicherheitsrelevante Anwendungsfälle wie z.B. das Eisenbahnsicherungswesen sind signaltechnisch sichere Mehrrechnersysteme entwickelt worden, in denen die zu verarbeitenden Daten in mehreren Kanälen jeweils unabhängig voneinander nach bestimmten Gesetzmäßigkeiten behandelt werden; durch Vergleichsprozeduren werden etwaige Datenabweichungen in den einzelnen Kanälen erkannt und in entsprechende Steuerkommandos umgesetzt, die im Sinne eines Gefährdungsausschlusses auf den zu steuernden Prozeß wirken. Signaltechnisch sichere Mehrrechnersysteme müssen aber nicht nur in der Lage sein, die ihnen zugeführten Daten in der vorgegebenen Weise zu behandeln, sondern sie müssen auch in der Lage sein festzustellen, ob die in ihren signaltechnisch nicht sicheren Ein/Ausgabebaugruppen anstehenden Daten beispielsweise infolge einer Übertragungsstörung oder eines Bauteiledefektes verfälscht sind oder nicht, um dann die Auswertung dieser verfälschten Daten zu unterbinden.

Ein bekanntes Verfahren zur Sicherung der Datenübermittlung sieht vor, den eigentlichen Nutzdaten sendeseitig nach bestimmten Gesetzmäßigkeiten gebildete Prüfdaten beizugeben, aus den übermittelten Nutzdaten empfangsseitig nach den gleichen Gesetzmäßigkeiten die zugehörigen Prüfdaten nachzubilden und diese mit den übermittelten Prüfdaten zu vergleichen. Diese Art der Datensicherung ist im allgemeinen um so wirkungsvoller, je aufwendiger die Prüfdaten werden.

Bei der heutigen Technik sind die Ein/Ausgabebaugruppen elektronischer Datenverarbeitungseinrichtungen üblicherweise mit hochintegrierten Schaltkreisen (FIFOS) besetzt, deren mögliche Ausfallreaktionen nicht umfassend bekannt sind und aus Aufwandsgründen auch nicht durch Analyse ermittelt werden können. Dies hat zur Folge, daß der Nachweis dafür, daß es keine Ausfallwirkung gibt, die trotz Redundanzprüfung unerkannt bleibt, in letzter Konsequenz nicht vollständig geführt werden kann, so daß auch bei sehr umfangreichen Prüfdaten nicht erkennbare Nutzdatenverfälschungen nicht ausgeschlossen werden können. Deshalb erfüllt dieses Lösungskonzept die Forderungen hinsichtlich signaltechnischer Sicherheit als Voraussetzung für die Zulassung einer Telegrammübertragung für besonders sicherheitsrelevante Anwendungen nur unzureichend.

Nicht vorhersagbare Ausfallreaktionen einer Baugruppe, z.B. einer mit hochintegrierten Schaltkreisen bestückten Ein/Ausgabebaugruppe, lassen sich grundsätzlich durch Vervielfachung dieser Baugruppen und Vergleich ihrer Reaktionen miteinander erkennen. Für den vorliegenden Anwendungsfall bedeutet dies, daß die ein-bzw. auszugebenden Informationen jeweils parallel in mindestens zwei gesonderte Ein/Ausgabebaugruppen einzuschreiben sind und daß das Mehrrechnersystem dann die gegenseitige Übereinstimmung der abgespeicherten Daten überprüft. Wird beim Vergleich der in diesen Baugruppen gespeicherten Daten eine Ungleichheit erkannt, so sperrt das Rechnersystem die Verwertung der gespeicherten Informationen. Damit ist die Ungefährlichkeit des ersten Ausfalls einer Ein/Ausgabebaugruppe absolut gegeben.

Ein Defekt an einer Ein/Ausgabebaugruppe soll zwar als solcher sofort erkannt und in seiner Auswirkung unwirksam gemacht werden; ein derartiger Defekt soll jedoch nach Möglichkeit nicht den weiteren Datenverkehr des Rechnersystems mit den Systemelementen blockieren, die die durch den Defekt betroffene Ein/Ausgabebaugruppe mit Daten versorgen bzw. von dort Daten beziehen und er soll insbesondere nicht zum Ausfall des gesamten Rechnersystems führen. Um den Datenverkehr auch beim Ausfallen einzelner Ein/Ausgabebaugruppen fortführen zu können, ist es bekannt, jeder Ein/Ausgabebaugruppe mindestens eine entsprechende Reservebaugruppe beizuordnen, die spätestens im Störungsfall zu aktivieren ist und dann die Datenübertragung übernimmt.

Nachteilig an dieser Ausführung ist der hohe Aufwand für die Ein/Ausgabebaugruppen. Dies ist besonders schwerwiegend, wenn es sich bei den Ein/Ausgabebaugruppen um die Schnittstellen zu vielen anderen Rechnern oder sonstigen Anlagenelementen mit gleichen Anforderungen handelt. Dann muß nämlich dieser zusätzliche Aufwand an allen Rechnern getrieben werden und das geht erheblich ins Geld.

Eine Möglichkeit, die beiden vorgenannten Sicherungsmethoden miteinander zu verknüpfen, besteht darin, die zu übermittelnden Daten mit Prüfdaten zu versehen und mehrkanalig auszuwerten. Dieses Verfahren wird bei der in der DE-OS 26 09 107 offenbarten Schaltung angewandt. Nach Prüfung der Redundanz in mehreren voneinander unabhängigen Baugruppen werden die von diesen Baugruppen gebildeten Ergebnisse miteinander verglichen. Wenn man davon ausgeht, daß - wie bereits dargelegt - durch Redundanzprüfungen Datenverfälschungen in einem Register nicht mit absoluter Sicherheit erkannt werden können, dann können derartige Verfälschungen auch nicht durch eine verdoppelte Redundanzprüfung sicher aufgezeigt werden. Das bedeutet, daß die aus der DE-OS 26 09 107 bekannte Schaltung den hohen Sicherheitsanforderungen signaltechnisch sicherer Mehrrechnersysteme nicht gerecht wird.

Aufgabe der vorliegenden Erfindung ist es, Verfahren zum Betrieb eines signaltechnisch sicheren Mehrrechnersystems gemäß dem Oberbegriff des Patentanspruches 1 bzw. 2 anzugeben, die etwaige Datenverfälschungen in bestimmten, durch inhaltlich gleiche Datentelegramme beschickten Ein/Ausgabebaugruppen sicher erkennen, um sie in ihrer Auswirkung unwirksam zu machen und die es darüber hinaus gestatten , den Datenverkehr auch nach dem Auftreten einer Datenverfälschung mindestens bedingt aufrechtzuerhalten, ohne daß es hierzu der Bereitstellung zusätzlicher Reservebaugruppen bedarf. Die erfindungsgemäßen Verfahren sollen dabei in sich so transparent sein, daß der Nachweis für den sicheren Aufgriff von Datenverfälschungen als Voraussetzung für die Zulassung der erfindungsgemäßen Verfahren bei sicherheitsrelevanten Anwendungen möglich ist.

Die Erfindung löst diese Aufgabe durch die kennzeichnenden Merkmale des Patentanspruches 1 bzw. die des Patentanspruches 2. Vorteilhafte Aus- und Weiterbildungen der Erfindung sind in den Unteransprüchen angegeben.

Beide Verfahren sind so beschaffen, daß sie auf Datenverfälschungen in den mit übereinstimmenden Datentelegrammen zu belegenden Ein/Ausgabebaugruppen eines Mehrrechnersystems sicher reagieren, indem sie die Auswertung der fehlerbehafteten Daten verhindern und die an der Datenverfälschung tatsächlich oder möglicherweise beteiligten Elemente von der weiteren Datenübermittlung ausschließen. Die weitere Übermittlung von Daten geschieht in Form sogenannter Langtelegramme, die aus jeweils zwei inhaltlich übereinstimmenden Telegrammen üblicher Länge bestehen, ausschließlich über solche Ein/Ausgabebaugruppen und solche Übertragungskanäle, die durch die festgestellte Störung nicht betroffen sind. Dabei führen die beiden Verfahren zu unterschiedlichen Reaktionen bezogen auf die Anzahl der von der jeweiligen Störung betroffenen Systemelemente: Nach den Merkmalen des Anspruches 1 bleibt die jeweilige Störung mindestens zunächst auf diejenigen Systemelemente beschränkt, die an einer fehlerhaften Datenübertragung tatsächlich beteiligt waren, also auf eine Aus- und eine Eingabebaugruppe zweier Systemelemente; die Übertragung von Daten zwischen allen übrigen Systemelementen, auch zwischen den durch die Störung betroffenen und den übrigen Systemelementen, geschieht vorerst - bis zum Auftreten eventueller weiterer Störungen - zweikanalig durch Telegramme üblicher Länge, danach bei dem durch diese weiteren Störungen betroffenen Systemelementen ebenfalls einkanalig mittels Langtelegrammen. Demgegenüber sehen die Merkmale des Anspruches 2 vor, beim Auftreten einer Störung alle Systemelemente hiervon zu unterrichten und dafür zu sorgen, daß alle Systemelemente im Verkehr mit den durch die Störung direkt betroffenen Systemelementen fortan z.B. einkanalig unter Verwendung von Langtelegrammen verkehren.

Nach beiden Verfahren wird die Datenübertragung im Anschluß an das Auffinden fehlerbehafteter Daten unter zusätzlicher Datensicherung und Belegung eines durch die Datenverfälschung nicht betroffenen Übertragungskanals für eine bestimmte Zeitspanne zugelassen, die zum Beheben des eingetretenen Defektes genutzt werden kann.

Die Erfindung ist nachstehend anhand von in der Zeichnung schematisch dargestellten Ausführungsbeispielen näher erläutert.

Die Zeichnung zeigt in den Figuren 1 und 2 einen besonders vorteilhaften Aufbau von aus mehreren signaltechnisch sicheren Mehrrechnersystemen bestehenden Rechneranordnungen, die in unterschiedlicher Weise auf fehlerhaft abgelegte Daten reagieren, und in Figur 3 ein Funktionsschaubild zur Erläuterung der erfindungsgemäßen Verfahren bei einem signaltechnisch sicheren Zweirechnersystem.

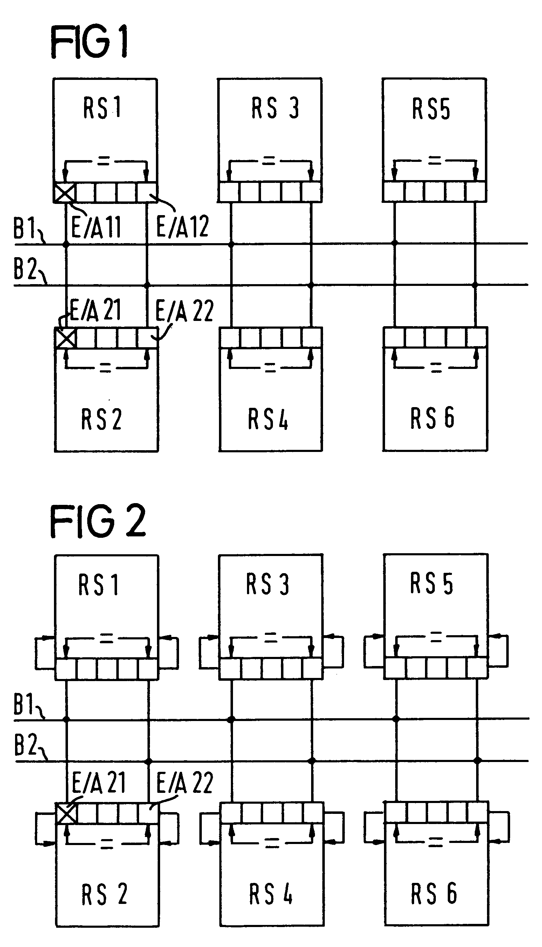

Die in Figur 1 dargestellte Rechneranordnung besteht aus beispielsweise sechs signaltechnisch sicheren Mehrrechnersystemen RS1 bis RS6, die über zugeordnete Ein/Ausgabebaugruppen an die beiden Busse B1 und B2 eines Bussystems angeschlossen sind, über das die Mehrrechnersysteme zweikanalig miteinander kommunizieren. Es ist angenommen, daß das Rechnersystem RS2 Daten in Form eines Telegrammes an das Rechnersystem RS1 zu übermitteln hat. Hierzu aktiviert das Rechnersystem RS2 seine beiden Ein/Ausgabebaugruppen E/A21 und E/A22 zur beispielsweise adressenorientierten Übertragung inhaltlich gleicher Datentelegramme über die beiden Busse B1 und B2 an die Ein/Ausgabebaugruppen E/A11 und E/A12 des Rechnersystems RS1; die über die beiden Busse übertragenen Datentelegramme können dabei unterschiedlich, z.B. invers dargestellt sein. Das die Daten aufnehmende Rechnersystem RS1 prüft die in seinen Ein/Ausgabebaugruppen abgelegten Daten vor ihrer Anerkennung auf Einhaltung des festgelegten Datenformates und auf inhaltliche Übereinstimmung. Dabei möge das Rechnersystem RS1 in seinen Ein/Ausgabebaugruppen E/A11 und E/A12 voneinander abweichende Daten feststellen. Das Rechnersystem verwirft daraufhin das übermittelte Datentelegramm und fordert über beide Busse B1, B2 vom Datensender, dem sicheren Mehrrechnersystem RS2, eine erneute Telegrammübertragung an. Genügen die dabei übermittelten Daten den Prüfbedingungen des Rechnersystems RS1, so werden sie anerkannt, wobei die Anerkennung der Daten dem Datensender quittiert werden kann. Endet auch der zweite Versuch einer Datenübermittlung negativ, d.h. stellt der Datenempfänger inhaltlich oder vom Format her abweichende Daten in seinen Ein/Ausgabebaugruppen fest, so stellt er auf noch zu erläuternde Weise fest, welcher der in seinen Ein/Ausgabebaugruppen abgelegten Datensätze fehlerhaft ist und welcher nicht. Im vorliegenden Beispiel möge das Rechnersystem RS1 die in seiner Ein/Ausgabebaugruppe E/A11 anstehenden Daten als fehlerhaft erkannt haben. Es sperrt daraufhin rechnerintern die weitere Aufnahme von Daten über die betreffende Ein/Ausgabebaugruppe und unterrichtet mindestens das Mehrrechnersystem RS2, von dem das fehlerbehaftete Datentelegramm stammte, hiervon. Dies führt dort zum Setzen eines entsprechenden Sperrvermerkes, der die weitere Übertragung von Daten über die Ein/Ausgabebaugruppe E/A21 zur Ein/Ausgabebaugruppe E/A11 des Mehrrechnersystems RS1 verhindert. Damit wird dem Umstand Rechnung getragen, daß empfangsseitig zwar die aufgetretene Datenverfälschung erkennbar ist, nicht jedoch, wo der Ort dieser Datenverfälschung liegt.

Wenn die von der festgestellten Störung direkt betroffenen beiden Rechnersysteme auch mit anderen, an das gleiche Bussystem angeschlossenen Rechnersystemen kommunizieren sollen, ist es vorteilhaft, auch diese Rechner davon zu unterrichten, daß bestimmte Ein/Ausgabebaugruppen des die Störung feststellenden Rechnersystems und ggf. des Rechnersystems, von dem das verfälschte Datentelegramm stammte, für die weitere Datenübertragung nicht mehr zur Verfügung stehen. Hierdurch soll verhindert werden, daß ein Defekt in einer einzigen Ein/Ausgabebaugruppe nach und nach zum Sperren weiterer Ein/Ausgabebaugruppen anderer Rechnersysteme führt.

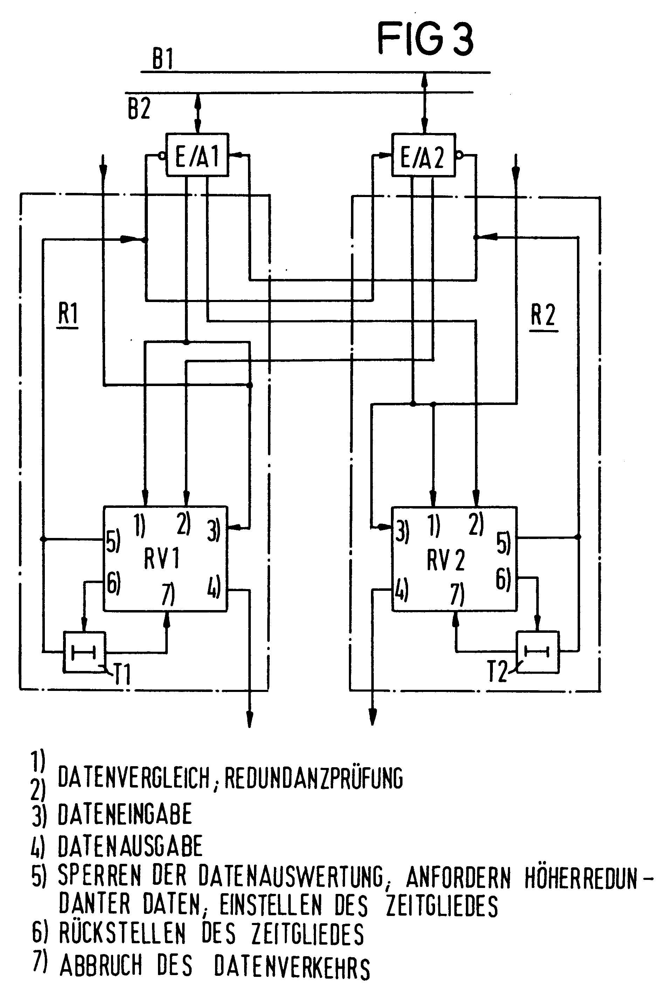

Die durch die Störung direkt betroffen Mehrrechnersysteme RS1 und RS2 korrespondieren untereinander und ggf. mit den durch die Störung nicht direkt betroffenen Mehrrechnersystemen RS3 bis RS6 fortan auf eine Weise, wie sie im einzelnen anhand der Figur 3 erläutert wird.

Bei dem Ausführungsbeispiel der Figur 2 ist angenommen, daß auch das jeweils sendende Mehrrechnersystem die in seinen Ein/Ausgabebaugruppen zur Übertragung anstehenden Daten vor der Übertragung auf Übereinstimmung prüft. Wieder soll dabei das sichere Mehrrechnersystem RS2 Datentelegramme über das Bussystem B1, B2 an das Mehrrechnersystem RS1 übermitteln. Beim Rücklesen der in den Ein/Ausgabebaugruppen E/A21 und E/A22 anstehenden Daten möge das Mehrrechnersystem RS2 Abweichungen in den Daten feststellen. Die Ausgabe dieser Daten wird daraufhin verhindert und das Rechnersystem versucht - ggf. nach erneuter Generierung der entsprechenden Daten - auf noch zu erläuternde Weise festzustellen, welcher der in seinen Ein/Ausgabebaugruppen anliegenden Datensätze fehlerhaft ist. Es möge dabei zu der Erkenntnis gelangen, daß die in seiner Ein/Ausgabebaugruppe E/A21 anliegenden Daten fehlerhaft sind. Das sichere Mehrrechnersystem veranlaßt daraufhin durch Setzen einer entsprechenden Sperrmarkierung, daß über diese Ein/Ausgabebaugruppe keine weiteren Daten abgegeben werden; ggf. wird auch die Aufnahme von Daten über diese Ein/Ausgabebaugruppe gesperrt. Das Mehrrechnersystem RS2 unterrichtet die übrigen Mehrrechnersysteme von dieser Maßnahme und kommuniziert mit diesen Rechnersystemen fortan auf die nachstehend näher erläuterte Weise.

Die Zeichnung zeigt in Figur 3 ein Funktionsschaubild für die Erläuterung der erfindungsgemäßen Verfahren zum Betrieb eines Mehrrechnersystems, das durch zwei Einzelrechner R1 und R2 gebildet wird. In der Zeichnung sind nur diejenigen Elemente dargestellt, die für die Erläuterung der erfindungsgemäßen Verfahren erforderlich sind. Die Ein- bzw. Ausgabe der hier interessierenden Daten erfolgt über zwei signaltechnisch nicht sichere Ein/Ausgabebaugruppen E/A1 und E/A2, die auf gesonderte Busse B1 und B2 geführt sind. Über diese Ein/Ausgabebaugruppen können sowohl Datentelegramme vom Rechnersystem aufgenommen als auch Daten an andere Rechner oder an eine Peripherie abgegeben werden. Die Daten setzen sich aus Nutz- und Prüfdaten zusammen.

Die bei der Eingabe von Daten in das Zweirechnersystem über die Busse B1, B2 zweikanalig angelieferten und in den Registern der Ein/Ausgabebaugruppen E/A1 und E/A2 anstehenden Daten werden im Zweirechnersystem jeweils vor ihrer Anerkennung miteinander verglichen, wobei sich dieser Vergleich zunächst nur auf die Nutzdaten beschränken kann; es ist aber auch möglich, die jeweils übermittelten Daten grundsätzlich auch einer Redundanzprüfung zu unterziehen, d.h. die Zuordnung von Nutz- und Prüfdaten zu prüfen. Dieser Vergleich bzw. die zusätzliche Redundanzprüfung findet dezentral in den beiden Einzelrechnern R1, R2 des sicheren Mehrrechnersystem statt. Jeder Einzelrechner vergleicht bzw. prüft die ihm von beiden Ein/Ausgabebaugruppen E/A1 und E/A2 angebotenen Datensätze. Stellen die Rechner unabhängig voneinander aber übereinstimmend abweichende Daten in den beiden Ein/Ausgabebaugruppen fest, so verwerfen sie die dort abgelegten Daten und fordern vom jeweiligen Datensender die erneute Übertragung der von ihnen als fehlerhaft erkannten Daten an. Genügen diese Daten den gegebenen Bewertungsbedingungen, so werden sie von den beiden Einzelrechnern akzeptiert und der weiteren Verarbeitung RV1, RV2 zugeführt.

Genügen die angeforderten Daten auch jetzt den gegebenen Bewertungsbedingungen nicht, so werden auch sie verworfen. Die beiden Einzelrechner R1, R2 versuchen nun festzustellen, welche der beiden Ein/Ausgabebaugruppen fehlerhafte Daten enthält und welche nicht. Hierzu unterziehen beide Rechner die ihnen von beiden Ein/Ausgabebaugruppen zugeführten Daten einer Redundanzprüfung. Dabei sollen beide Rechner übereinstimmend feststellen, daß der in einer Ein/Ausgabebaugruppe anstehende Datensatz den Redundanzbedingungen genügt, der andere jedoch nicht. Im angenommenen Fall sollen beide Rechner die in der Ein/Ausgabebaugruppe E/A2 anliegenden Daten als fehlerhaft erkannt haben, während die in der Ein/Ausgabebaugruppe E/A1 anstehenden Daten den vorgegebenen Redundanzbedingungen genügen sollen.

Nach dem Vergleich ihrer Prüfergebnisse veranlassen beide Rechner das Setzen von Sperrmarkierungen und diese Sperrmarkierungen verhindern, daß die in der Ein/Ausgabebaugruppe E/A2 abgelegten Daten mindestens beim Datenverkehr mit demjenigen Element des Übertragungssystems, von dem die Daten fehlerhaft empfangen bzw. abgelegt wurden, fortan ausgewertet bzw. fortgeschaltet werden. Dies geschieht z.B. dadurch, daß rechnerintern der Aufruf der der als gestört erkannten Ein/Ausgabebaugruppe zugeordneten Adresse verhindert wird.

Das die Störung erkennende Rechnersystem R1, R2 unterrichtet nun über das Bussystem die Datenquelle, von der die die Störung verursachenden Daten stammen, über die eingetretene Störung und den durch die Störung betroffenen Übertragungskanal B1. Die jeweils angesprochene Datenquelle sperrt daraufhin ihrerseits die Auswertung bzw. Fortschaltung von Datentelegrammen über den gestörten Übertragungskanal B1. Die beiden durch die Störung direkt betroffenen Rechnersysteme kommunizieren dann nur noch über mindestens einen durch die Störung nicht betroffenen Übertragungskanal, im angenommenen Beispiel über den Bus B2.

Für den Fall, daß mindestens einer der beiden von der Störung direkt betroffenen Mehrrechnersysteme über das Bussystem noch mit weiteren Rechnersystemen kommunizieren soll, ist es vorteilhaft, auch diese Rechner davon zu unterrichten, daß bestimmte Ein/Ausgabebaugruppen für die Datenübertragung nicht mehr zur Verfügung stehen. Gleichzeitig mit dem Setzen der Sperrmarkierung fordert das die Störung erkennende Rechnersystem das Rechnersystem, von dem die fehlerbehafteten Daten stammen, bzw. auch alle Rechnersysteme, mit denen es zu kommunizieren hat, dazu auf, zukünftig für die Übertragung von Daten an das Rechnersystem R1, R2 höherredundante Daten zu erstellen und ausschließlich an die Ein/Ausgabebaugruppe E/A1 zu übertragen; entsprechend unterrichtet das sichere Mehrrechnersystem R1, R2 das bzw. die übrigen Mehrrechnersysteme davon, daß es selbst ebenfalls höherredundante Daten erstellen und diese über die Ein/Ausgabebaugruppe E/A1 an die Mehrrechnersysteme übermitteln wird. Unter höherredundanten Daten sind sogenannte Langtelegramme zu verstehen, die aus je zwei inhaltlich gleichen Telegrammen üblicher Lange bestehen und nacheinander über den oder die verbliebenen Kanäle übertragen werden.

Die vorstehend erläuterten Maßnahmen können sinngemäß auch für einen Datensender gelten, von dem die als fehlerhaft erkannten Daten stammen.

Einzelne oder alle Mehrrechnersysteme überprüfen nun fortlaufend bei Datenverkehr mit dem bzw. den durch die Störung direkt betroffenen Mehrrechnersystemen den Empfang von Langtelegrammen und prüfen diese auf des Einhalten der Redundanzbedingungen und sie erstellen auch selbst für den Datenverkehr mit diesen Mehrrechnersystemen Langtelegramme. Entsprechendes gilt für die Mehrrechnersysteme mit den ausgefallenen Ein/Ausgabeeinrichtungen.

Nach der Erfindung ist vorgesehen daß die nach dem Ausfallen einer Ein/Ausgabebaugruppe zu übertragenden Langtelegramme das gleich Format wie die zuvor übertragenen Datentelegramme aufweisen, daß sie aber von der jeweiligen Datenquelle her zweifach übertragen werden, wobei sich dann nicht ihr Inhalt aber ihre Darstellung ändert. Vorzugsweise ist dabei an eine inverse Darstellung der Daten in aufeinanderfolgenden Datentelegrammen gedacht. Durch die zweimalige Übertragung inhaltlich übereinstimmender Datentelegramme wird gegenüber einer nur einmaligen Datenübertragung eine höhere Redundant erreicht. Das jeweils als Empfänger fungierende sichere Mehrrechnersystem prüft vor der Anerkennung der Daten, ob in den ihm nacheinander übermittelten Datentelegrammen sowohl die Nutz- als auch die Prüfinformationen jeweils von ihrem Inhalt her übereinstimmen und ob die übermittelten Prüfinformationen mit den vom Rechnersystem nachgebildeten Prüfinformationen übereinstimmen. Nur solange diese Voraussetzungen gegeben sind, ist die Auswertung der von einem Rechnersystem mit einer defekten Ein/Ausgabebaugruppe stammenden Daten zulässig. Führt eine Redundanzprüfung zu dem Ergebnis, daß entweder die nacheinander übermittelten Nutz- und Prüfinformationen nicht übereinstimmen oder daß die Zuordnung von Nutz- und Prüfinformationen nicht mehr gegeben ist, so wird der weitere Datenverkehr zum bzw. vom Mehrrechnersystem über die als gestört angesehenen Ein/Ausgabebaugruppen abgebrochen. Das Mehrrechnersystem mit den ausgefallenen Ein/Ausgabebaugruppen schaltet sich aber nur insoweit aus dem Rechnerverbund aus als die Datenübermittlung über die gestörten Ein/Ausgabebaugruppen betroffen ist; im übrigen arbeitet es nach wie vor weiter und setzt über andere Ein/Ausgabebaugruppen zugeführte Meldungen bestimmungsgemäß in entsprechende Kommandos um und überträgt diese Kommandos an die Prozeßperipherie.

Die Fortführung des Datenverkehrs über nur eine von zwei üblicherweise mit inhaltlich gleichen Datentelegrammen versorgte Ein/Ausgabebaugruppen ist nach der Lehre der vorliegenden Erfindung aber nicht für unbegrenzte Zeit zulässig, sondern diese Zeit ist auf eine maximal zulässige Zeitspanne begrenzt. Ist bis zu diesem Zeitpunkt die Störung durch Auswechseln oder Instantsetzen der gestörten Ein/Ausgabebaugruppe bzw. des Übertragungskanals nicht behoben, so verbietet sich die weitere Datenübertragung über das Bussystem. Die maximal zulässige Zeit für das Aufschalten einer einzigen Ein/Ausgabebaugruppe auf beide Einzelrechner des Mehrrechnersystems ist abhängig von der für die betreffende Baugruppe aufgrund ihres Aufbaus zu erwartenden mittleren Zeit zwischen zwei unabhängig voneinander auftretenden Fehlern (MTBF = meantime between failures) und einer Kenngröße, die abhängig ist von der für die Datendarstellung erreichten Redundanz. Die erreichbare maximale Zeit, in der die Telegrammübertragung z.B. einkanalig betrieben werden darf, liegt bei einer typischen Rechneranordnung mit einer Vielzahl von signaltechnisch sicheren Mehrrechnersystemen in der Größenordnung von weit über 10 Stunden. In dieser Zeit, die rechnerisch bestimmt werden kann, läßt sich der eingetretene Defekt durch Instandsetzung oder durch Ersatz von Baugruppen mühelos beheben.

Für die Begrenzung der Zeitspanne, für die nach dem Ausfallen einer Ein/Ausgabebaugruppe der Datenverkehr über eine noch intakte Ein/Ausgabebaugruppe weitergeführt werden darf, ist dem sicheren Mehrrechnersystem ein signaltechnisch sicheres Zeitglied zugeordnet. Dieses signaltechnisch sichere Zeitglied, das in der Zeichnung durch die Zeitglieder T1 und T2 verdeutlicht ist, wird eingestellt, sobald die Rechner des Mehrrechnersystems die Auswertung der in einer Ein/Ausgabebaugruppe abgespeicherten Daten bleibend verhindern. Wird die dem Zeitglied eingeprägte Schaltzeit überschritten, so sperren die Rechner auch die Auswertung der noch intakten Ein/Ausgabebaugruppe. Diese Sperrung tritt auch ein, wenn mindestens einer der Einzelrechner in einem ihm mitgeteilten Langtelegramm irgendwelche Fehler entdeckt und wenn diese Fehler nicht durch nochmalige Datenübertragung zu beseitigen sind.

Für die Fortführung des Datenverkehrs nach dem Auftreten einer Störung in einer Ein/Ausgabebaugruppe ist ausschlaggebend, daß das betroffene Mehrrechnersystem die defekte Ein/Ausgabebaugruppe beziehungsweise den gestörten Datenkanal auch tatsächlich erkennt und nicht etwa Daten aus der defekten Ein/Ausgabebaugruppe beziehungsweise aus dem gestörten Datenkanal übernimmt. Wie bereits erläutert wird die defekte und die intakte Ein/Ausgabebaugruppe über Redundanzprüfungen ermittelt.

Dabei kann der Fall eintreten, daß nicht nur eine, sondern beide Redundanzprüfungen zu dem Ergebnis kommen, daß die jeweils übermittelten Prüfdaten mit den vom Mehrrechnersystem nachgebildeten Prüfdaten übereinstimmen. Dies ist möglich, wenn neben der Verfälschung von Nutzdaten im gleichen Kanal auch die übermittelten Prüfdaten gerade so verfälscht werden, daß sich daraus die für die verfälschten Nutzdaten richtigen Prüfdaten ergeben. Dieser Fall ist zwar sehr unwahrscheinlich, er ist jedoch nicht gänzlich auszuschließen. Tritt dieser Fall ein, so wird dies beim Vergleich der Redundanzprüfergebnisse festgestellt. Da die beiden Einzelrechner aus den Redundanzprüfungen in diesem Fall nicht den gestörten Übertragungskanal eindeutig bestimmen können, unterbinden sie in diesem Fall die weitere Datenübertragung über beide Ein/Ausgabebaugruppen.

Die vorstehend für Rechneranordnungen nach Figur 1 beschriebenen Abläufe gelten entsprechend auch für Rechneranordnungen gemäß Figur 2, bei denen die Rechner eines Mehrrechnersystems die in ihren Ein/Ausgabebaugruppen zur Übertragung anstehenden Datentelegramme vor ihrer Freigabe zurücklesen und die Freigabe vom Bilden übereinstimmender Prüfergebnisse in den Rechnern des Mehrrechnersystems abhängig machen.

Die erfindungsgemäßen Verfahren zum Betrieb eines signaltechnisch sicheren Mehrrechnersystems sind nicht auf die Ausbildung des sicheren Mehrrechnersystems als Zweivon-Zwei/Rechnersystem beschränkt. Sie lassen sich vielmehr mit Vorteil bei jedem beliebigen signaltechnisch sicheren Mehrrechnersystem anwenden, das über mindestens zwei mit inhaltlich gleichen Datentelegrammen beschickte Ein/Ausgabebaugruppen mit anderen Rechnern oder mit der Peripherie kommuniziert. Bei einem derartigen aufwendiger gestalteten Mehrrechnersystem kann es zulässig sein, nicht nur den Ausfall einer einzigen Ein/Ausgabebaugruppe, sondern ggf. auch den Ausfall mehrerer Ein/Ausgabebaugruppen zu tolerieren, wenn über die vorhandenen noch intakten Ein/Ausgabebaugruppen ein ordnungsgerechter Datenverkehr noch möglich ist. Die erfindungsgemäßen Verfahren sind insbesondere auch bei einem Zweivon-Drei/Rechnersystem vorteilhaft anwendbar.

Für die Datenübertragung zwischen den einzelnen Mehrrechnersystemen können beliebige Übertragungssysteme vorgesehen sein; vorzugsweise ist jedoch an die Verwendung linearer Bussysteme, insbesondere Ringbussysteme gedacht.

Dort, wo derartige Übertragungssysteme verdoppelt werden, geschieht dies überwiegend aus Verfügbarkeitsgründen. Bei dem erfindungsgemäßen Verfahren zum Betrieb eines signaltechnisch sicheren Mehrrechnersystems dagegen wird die Verdoppelung der Bussysteme zunächst ausschließlich zur Erhöhung der Sicherheit beim Datenverkehr zwischen den Rechnersystemen verwendet, indem die Daten mehrkanalig übertragen und die in den Ein/Ausgabebaugruppen jeweils anliegenden Daten vor ihrer Anerkennung auf Übereinstimmung geprüft werden. Erst beim Ausfall eines Übertragungskanals zwischen zwei Mehrrechnersystemen wird die einem verdoppelten Übertragungssystem innenwohnende hohe Verfügbarkeit ausgenutzt und die Datenübertragung vorübergehend einkanalig über das jeweils noch als ordnungsgerecht angesehene Übertragungssystem betrieben; dies ist nach der Lehre der Erfindung zulässig, sofern die dabei übermittelten Daten durch zusätzliche Maßnahmen gegen nicht erkennbare Fehler zusätzlich gesichert werden.

**Patentansprüche**

1. Verfahren zum Betrieb eines signaltechnisch sicheren Mehrrechnersystems (z.B. RS1) mit mindestens zwei signaltechnisch nicht sicheren Ein/Ausgabebaugruppen,(E/A11, E/A12) über die die Rechner des Mehrrechnersystems (RS1) zweikanalig (B1, B2) Datentelegramme von und/oder zu anderen Rechnern und/oder sonstigen datenaufnehmenden, abgebenden oder verarbeitenden Systemen (RS2 bis RS6) übertragen und über die sie von dort in Form von inhaltlich übereinstimmenden Telegrammen für diese Ein/Ausgabebaugruppen (E/A11, E/A12) durch Prüfdaten gesicherte U Nutzdaten empfangen bzw. nach dort abgeben, **dadurch gekennzeichnet,**

- daß das sichere Mehrrechnersystem (RS1) spätestens beim Erkennen von ihm von einem anderen datenaufnehmenden, abgebenden oder verarbeitenden System (z.B. RS2) über beide Kanäle (B1, B2) übermittelten ungleichen Daten in diesen Ein/Ausgabebaugruppen (E/A11, E/A12) die dort abgelegten Daten einer Redundanzprüfung unterzieht und hieraus die Ein/Ausgabebaugruppe (z.B. E/A11) mit den fehlerhaften Daten und den zugehörigen Kanal (B1) bestimmt,

- daß das sichere Mehrrechnersystem (RS1) dann die weitere Auswertung bzw. Fortschaltung von Daten über diese Ein/Ausgabebaugruppe (E/A11) und den zugehörigen Kanal (B1) im Verkehr mit dem System (RS2), von dem die fehlerbehafteten Daten stammen, sperrt,

- daß das sichere Mehrrechnersystem (RS1) das System (RS2), von dem es die als fehlerhaft erkannten Daten erhalten hat, von dieser Maßnahme unterrichtet und dieses dazu veranlaßt, die weitere Auswertung bzw. Fortschaltung von Daten über diejenige Ein/Ausgabebaugruppe (E/A21) von der die als fehlerhaft erkannten Daten stammen, und den zugehörigen Kanal (B1), im Verkehr mit ihm (RS1) zu unterbinden,

- daß das sichere Mehrrechnersystem (RS1) dieses System (RS2) im Verkehr mit ihm zur Abgabe von Langtelegrammen in Form zweier inhaltlich übereinstimmender Telegramme auf eine der von ihr noch betriebenen, auf den anderen Kanal (132) geführten Ein/Ausgabebaugruppen (E/A22) und die Redundanzprüfung der von dort stammenden Langtelegramme veranlaßt,

- daß das sichere Mehrrechnersystem (RS1) auch selbst im Verkehr mit dem betreffenden System (RS2) die zu übertragenden Daten zu Langtelegrammen zusammenstellt, über eine der von ihm noch betriebenen, auf den anderen Kanal (B2) geführten Ein/Ausgabebaugruppen (E/A12) an dieses System (RS2) übermittelt und es zur Redundanzprüfung der Langtelegramme veranlaßt,

- daß das sichere Mehrrechnersystem (RS1) bei Nichteinhaltung der Redundanzbedingungen durch die in einer der noch von ihm betriebenen Ein/Ausgabebaugruppen (E/A12) abgelegten Daten auch die weitere Auswertung bzw. Fortschaltung der dort abgelegten Daten unterbindet und daß das sichere Mehrrechnersystem (RS1) die weitere Auswertung und Fortschaltung der in einer seiner noch betriebenen Ein/Ausgabebaugruppen (E/A12) abgelegten Daten unterbindet, wenn seit dem ersten Feststellen fehlerhafter Daten in einer seiner Ein/Ausgabebaugruppen (E/A11) eine definierte maximale Zeitdauer vergangen ist, ohne daß die Störung in der bzw. den als defekt erkannten Ein/Ausgabebaugruppen (E/A11) bzw. dem betroffenen Übertragungskanal (B1) behoben wurde.

2. Verfahren zum Betrieb eines signaltechnisch sicheren Mehrrechnersystems (z.B. RS1) mit mindestens zwei signaltechnisch nicht sicheren Ein/Ausgabebaugruppen, (E/A11, E/A12) über die die Rechner des Mehrrechnersystems zweikanalig (B1, B2) Datentelegramme von und/oder zu anderen Rechnern und/oder sonstigen Daten aufnehmenden, abgebenden oder verarbeitenden Systemen (RS2 bis RS6) übertragen und über die sie von dort in Form von inhaltlich übereinstimmenden Telegrammen für diese Ein/Ausgabebaugruppen durch Prüfdaten gesicherte Nutzdaten empfangen bzw. nach dort abgeben, **dadurch gekennzeichnet,**

- daß das sichere Mehrrechnersystem (RS1) spätestens beim Erkennen von ungleichen Daten in diesen Ein/Ausgabebaugruppen (E/A11, E/A12) die dort abgelegten Daten einer Redundanzprüfung unterzieht und hieraus die Ein/Ausgabebaugruppe (z.B. E/A11) mit den fehlerhaften Daten und den zugehörigen Kanal (B1) bestimmt, daß das sichere Mehrrechnersystem (RS1) dann die weitere Auswertung bzw. Fortschaltung von Daten über diese Ein/Ausgabebaugruppe (E/A11) und den zugehörigen Kanal (B1) sperrt,
- daß das sichere Mehrrechnersystem dann die mit ihm kommunizierenden Systeme (RS2 bis RS6) zur Abgabe von Langtelegrammen in Form zweier inhaltlich übereinstimmender Telegramme auf eine der von ihm noch betriebenen, auf den anderen Kanal (B2) geführten Ein/Ausgabebaugruppen (E/A12) und die Redundanzprüfung der von dort stammenden Langtelegramme veranlaßt,
- daß das sichere Mehrrechnersystem (RS1) auch selbst im Verkehr mit den anderen Systemen (RS2 bis RS6) die zu übertragenden Daten zu Langtelegrammen zusammenstellt, über eine (E/A12) der von ihm noch betriebenen, auf den anderen Kanal (B2) geführten Ein/Ausgabebaugruppen an die anderen Systeme (RS2 bis RS6) übermittelt und diese zur Redundanzprüfung der Langtelegramme veranlaßt,

- daß das sichere Mehrrechnersystem (RS1) bei Nichteinhaltung der Redundanzbedingungen durch die in einer der noch von ihm betriebenen Ein/Ausgabebaugruppen (E/A12) abgelegten Daten auch die weitere Auswertung bzw. Fortschaltung der dort abgelegten Daten unterbindet
- und daß das sichere Mehrrechnersystem RS1) die weitere Auswertung und Fortschaltung der in einer seiner noch betriebenen Ein/Ausgabebaugruppen (E/A12) abgelegten Daten unterbindet, wenn seit dem ersten Feststellen fehlerhafter Daten in einer seiner Ein/Ausgabebaugruppen (E/A11) eine definierte maximale Zeitdauer vergangen ist, ohne daß die Störung in der bzw. den als defekt erkannten Ein/Ausgabebaugruppen bzw. dem betroffenen Übertragungskanal behoben wurde.

3. Verfahren nach Anspruch 1 oder 2, **dadurch gekennzeichnet,** daß das sichere Mehrrechnersystem (RS1) beim Feststellen von ungleichen Daten in seinen mit inhaltlich gleichenDaten versorgten Ein/Ausgabebaugruppen (E/A11, E/A12) und/oder beim Feststellen von Fehlern in den Langtelegrammen vor dem bleibenden Sperren der Auswertung der in den jeweils betroffenen Ein/Ausgabebaugruppen abgelegten Daten mindestens eine erneute Datenübermittlung anfordert.

4. Verfahren nach Anspruch 1, 2 oder 3, **dadurch gekennzeichnet,** daß das sichere Mehrrechnersystem (RS1) beim Erkennen ungleicher Daten in den durch die inhaltlich gleichen Telegramme belegten Ein/Ausgabebaugruppen (E/A11, E/A12) die weitere Auswertung bzw. die Fortschaltung von Daten aus den in den Vergleich jeweils einbezogenen Ein/Ausgabebaugruppen unterbindet, wenn die von ihm durchgeführten Redundanzprüfungen für die Daten in diesen Ein/Ausgabebaugruppen zu dem Ergebnis führen, daß die übermittelten Daten den Prüfbedingungen genügen.

5. Verfahren nach Anspruch 2 oder 3, **dadurch gekennzeichnet,** daß das Mehrrechnersystem (RS1) beim Erkennen fehlerhafter Daten in einer seiner Ein/Ausgabebaugruppen (E/A11) mindestens die Datenquelle (RS2), von der die fehlerhaft abgelegten Daten stammen, davon unterrichtet, von welcher ihrer Ein/Ausgabebaugruppen (E/A21) diese Daten stammen und daß die betreffende Datenquelle (RS2) daraufhin die weitere Ausgabe von Daten über diese Ein/Ausgabebaugruppe unterbindet und die Ausgabe von Langtelegrammen über eine ihrer dann noch betriebenen Ein/Ausgabebaugruppen (E/A22) auf einem anderen Kanal (B2) veranlaßt bzw. auch ihrerseits das Einhalten der vorgegebenen Redundanzbedingungen beim Datenempfang über diese Ein/Ausgabebaugruppe prüft.

6. Verfahren nach Anspruch 1, 2 oder 3, **dadurch gekennzeichnet,** daß die maximale Zeitdauer für die Betriebsfortführung des sicheren Mehrrechnersystems (RS1) ab dem ersten Feststellen fehlerhafter Daten in einer seiner Ein/Ausgabebaugruppen (E/A11) abhängig gemacht ist von dem für die noch betriebenen Ein/Ausgabebaugruppen zu erwartenden mittleren Ausfallabstand und der nach dem Auftreten der Störung gewählten Datenredundanz.

7. Verfahren nach Anspruch 1, 2 oder 3, **dadurch gekennzeichnet,** daß die Daten in den die Langtelegramme bildenden jeweils zwei Telegrammen üblicher Länge invers dargestellt sind.

8. Einrichtung zur Durchführung des Verfahrens nach mindestens einem der Ansprüche 1 bis 7, **dadurch gekennzeichnet,** daß für die Datenübertragung ein zweikanaliges Bussystem (B1, B2) vorgesehen ist, daß die zum Aufnahme jeweils inhaltlich gleicher Datentelegramme vorgesehenen Ein/Ausgabebaugruppen (E/A1, E/A2) des sicheren Mehrrechnersystems (R1, R2) an verschiedene Kanäle (B1 bzw. B2) des Bussystems angeschlossen sind und daß das sichere Mehrrechnersystem (R1, R2) ein signaltechnisch sicheres Zeitglied (T1, T2) aufweist, das beim Sperren der Auswertung von in einer Ein/Ausgabebaugruppe abgelegten Daten einstellbar ist, nach Ablauf der ihm eingeprägten Schaltzeit die Auswertung der Langtelegramme unterbindet und beim Feststellen von Übertragungs- oder Speicherfehlern in einem Langtelegramm die Auswertung von dessen Daten unterbindet.

**Claims**

1. Method for operating a fail safe multicomputer system (e.g. RS1) with some not fail safe, input/output modules (E/A11, E/A12), via which the computers of the multicomputer system (RS1) transmit on two-channels (B1, B2) data telegrams from and/or to other computers and/or data receiving, transmitting or processing systems (RS2 to RS6) and via which they receive from there or transmit to there user data, protected by test data, in the form of telegrams which correspond in terms of contents, for these input/output modules, characterised in that,

 - at the latest when the secure multicomputer system (RS1) detects non-identical data in these input/output modules (E/A11, E/A12) transmitted by a different data receiving, transmitting or processing system (e.g. RS2) on both channels (B1, B2), said multicomputer system (RS1) subjects the data stored there to a redundancy test and determines therefrom the input/output module (e.g. E/A11) with the errored data, and the associated channel (B1),

 - the secure multicomputer system (RS1) then inhibits the further evaluation or addressing of data via this input/output module (E/A11) and the associated channel (B1) in communication with the system (RS2) from which the errored data originate,

 - the secure multicomputer system (RS1) informs the system (RS2), from which it has received the data detected as errored, of this measure and causes the said system to stop the further evaluation or addressing of data by means of that input/output module (E/A21) from which the data detected as errored originate, and the associated channel (B1) in communication with it (RS1),

 - the secure multicomputer system (RS1) causes the said system (RS2) in communication with it to transmit long telegrams, in the form of two telegrams which correspond in terms of contents, to one of the input/output modules (E/A22) which is still operated by it and connected to the other channel (B2), and which causes the redundancy testing of the long telegrams originating from there,

 - the secure multicomputer system (RS1) also combines, even in communication with the respective system (RS2), the data to be transmitted to form long telegrams, transmits the said long telegrams to this system (RS2) via one of the input/output modules (E/A12) still operated by it and connected to the other channel (B2) and causes the said system to perform redundancy testing of the long telegrams,

- in the event of non-observance of the redundancy conditions by the data stored in one of the input/output modules (E/A12) still operated by it, the secure multicomputer system (RS1) also stops the further evaluation or addressing of the data stored there, and in that the secure multicomputer system (RS1) stops the further evaluation and addressing of the data stored in one of the input/output modules (E/A12) still operated by it if, since the first detection of errored data in one of its input/output modules (E/A11), a defined maximum period of time has elapsed without the fault in the input/output module or modules detected as defective or on the affected transmission channel (B1) having been eliminated.

2. Method for operating a multicomputer system (e.g. RS1), which is secure in terms of signalling technology, having at least two input/output modules (E/A11, E/A12), which are not secure in terms of signalling technology, via which the computers of the multicomputer system transmit on two channels (B1, B2) data telegrams from and/or to other computers and/or other data receiving, transmitting or processing systems (RS2 to RS6) and via which they receive from there or transmit to there user data, protected by test data, in the form of telegrams which correspond in terms of contents, for these input/output modules, characterised in that

- at the latest when non-identical data are detected in the said input/output modules (E/A11, E/A12), the secure multicomputer system (e.g. RS1) subjects the data stored there to a redundancy test and determines therefrom the input/output module (e.g. E/A11) with the errored data, and the associated channel (B1),
- the secure multicomputer system (RS1) then inhibits the further evaluation or addressing of data via this input/output module (E/A11) and the associated channel (B1),
- the secure multicomputer system then causes the systems (RS2 to RS6) communicating with it to transmit long telegrams, in the form of two telegrams which correspond to one another in terms of contents, to one of the input/output modules (E/A12) still operated by it and connected to the other channel (B2), and causes it to perform the redundancy monitoring of long telegrams originating from there,

- the secure multicomputer system (RS1) also combines, even in communication with the other systems (RS2 to RS6), the data to be transmitted to form long telegrams, transmits the said long telegrams to the other systems (RS2 to RS6) via one of the input/output modules (E/A12) still operated by it and connected to the other channel (B2) and causes the said systems to perform redundancy testing of the long telegrams,
- in the event of non-observance of the redundancy conditions by the data stored in one of the input/output modules (E/A12) still operated by it, the secure multicomputer system (RS1) also stops the further evaluation or addressing of the data stored there.
- and the secure multicomputer system (RS1) stops the further evaluation and addressing of the data stored in one of the input/output modules (E/A12) still operated by it if, since the first detection of errored data in one of its input/output modules (E/A11), a defined maximum period of time has elapsed without the fault in the input/output module or modules detected as defective or on the affected transmission channel having been eliminated.

3. Method according to Claim 1 or 2, characterised in that, when non-identical data are detected in its input/output modules (E/A11, E/A12) supplied with data which are identical in terms of contents and/or when errors are detected in the long telegrams before the permanent inhibiting of the evaluation of the data stored in the respectively affected input/output modules, the secure multicomputer system (RS1) requests at least one renewed data transmission.

4. Method according to Claim 1, 2 or 3, characterised in that, when non-identical data are detected in the input/output modules (E/A11, E/A12) occupied by the telegrams which are identical in terms of contents, the secure multicomputer system (RS1) stops the further evaluation or the addressing of data out of the input/output modules in each case involved in the comparison, if the redundancy tests carried out by it for the data in these input/output modules lead to the result that the transmitted data satisfy the test conditions.

5. Method according to Claim 2 or 3, characterised in that when errored data are detected in one of its input/output modules (E/A11), the multicomputer system (RS1) informs at least the data source (RS2), from which the data stored in errored fashion originate, from which of the input/output modules (E/A21) of said data source these data originate, and in that the respective data source (RS2) subsequently stops the further transmission of data via this input/output module (E/A21) and brings about the transmission of long telegrams via one of its input/output modules (E/A22), still operated then, on another channel (B2), or also itself tests the observance of the prescribed redundancy conditions on the reception of the data via this input/output module.

6. Method according to Claim 1, 2 or 3, characterized in that the maximum period of time for the continuation of operations of the secure multicomputer system (RS1) is made dependent, from the first detection of errored data in one of its input/output modules (E/A11), on the mean time between failures to be expected for the input/output modules still operated and on the data redundancy selected after the occurrence of the fault.

7. Method according to Claim 1, 2 or 3, characterized in that the data in the two telegrams of usual length which in each case form the long telegrams are represented in inverted form.

8. Device for carrying out the method according to at least one of Claims 1 to 7, characterized in that a two-channel bus system (B1, B2) is provided for the data transmission, and in that the input/output modules (E/A1, E/A2), provided for receiving data telegrams which are in each case identical in terms of contents, of the secure multicomputer system (R1, R2) are connected to different channels (B1 or B2) of the bus system, and in that the secure multicomputer system (R1, R2) has a timing element (T1, T2) which is secure in terms of signalling technology and can be set when the evaluation of data stored in an input/output module is inhibited, stops the evaluation of the long telegrams after expiry of the switching time impressed in it and stops the evaluation of the data of a long telegram when transmission or storage errors are detected in the said telegram.

## Revendications

1. Méthode de mise en oeuvre d'un systeme calculateurs à sécurité intrinsèque comportant plusieur circuits imprimés d'entrées/sorties à sécurité non intrisèque et au moyen desquels les ordinateurs du système à ordinateurs multiples (RS1) transmettent, dans deux canaux (B1,B2), des télégrammes de données en provenance et/ou en direction d'autres ordinateurs et/ou d'autres systèmes (RS2 à RS6) recevant, délivrant ou traitant des données, et au moyen desquels les ordinateurs reçoivent ou délivrent, à partir de là, sous la forme de télégrammes dont les contenus sont identiques, pour ces modules d'entrée/sortie, des données utiles protégées par des données de contrôle, caractérisé par le fait

   - que, au plus tard lorsque le système sûr à ordinateurs multiples (RS1) identifie des données différentes qui lui sont transmises par un autre système (par exemple RS2) recevant, délivrant ou traitant des données, par l'intermédiaire des deux canaux (B1,B2), dans ces modules d'entrée/sortie (T/A11, T/A12), le système (RS1) soumet les données mémorisées dans ces modules à un contrôle de redondance et détermine, à partir de là, le module d'entrée/sortie (par exemple E/A11) comportant les données erronées et le canal associé (B1),

   - que le système sûr à ordinateurs multiples (RS1) bloque alors la poursuite de l'évaluation ou de la transmission de données par l'intermédiaire de ce module d'entrée/sortie (E/A11) et du canal associé (B1), dans le trafic avec le système (RS2), d'où proviennent les données erronées,

   - que le système sûr à ordinateurs multiples (RS1) informe le système (RS2), à partir duquel il a reçu les données identifiées comme erronées, de cette disposition et amène ce système à interrompre la poursuite de l'évaluation ou de la transmission de données par l'intermédiaire du module d'entrée/sortie (E/A21), d'où proviennent les données identifiées comme erronées, et du canal associé (B1) dans le trafic avec le système (RS1),

   - que le système sûr à ordinateurs multiples (RS1) amène le système (RS2), qui échange un trafic avec lui, à envoyer de longs télégrammes sous la forme de deux télégrammes dont les contenus sont identiques, à l'un des modules d'entrée/sortie (E/A22) qu'il exploite encore et qui est pitoté dans l'autre canal (B2), et déclenche le contrôle de redondance des télégrammes provenant de ce module,

- que le système sûr à ordinateurs multiples (RS1) rassemble également, même dans le trafic avec le système considéré (RS2), les données devant être transmises pour former de longs télégrammes, les retransmet à ce système (RS2) par l'intermédiaire de l'un des modules d'entrée/sortie (E/A12) qu'il exploite encore et qui est piloté dans l'autre canal (B2), et amène ce système à exécuter un contrôle de redondance des longs télégrammes,

- que, dans le cas où les données mémorisées dans l'un des modules d'entrée/sortie (E/A12) qu'exploite encore le système sûr à ordinateurs multiples (RS1), ne sont pas respectées, ce système interrompt également la poursuite de l'évaluation ou de la transmission des données qui sont mémorisées dans ce module, et

- que le système sûr à ordinateurs multiples (RS1) interrompt la poursuite de l'évaluation et de la transmission des données mémorisées dans l'un des modules d'entrée/sortie (E/A12), qu'it exploite, lorsqu'une durée maximale définie s'est écoulée à partir de la première détermination de données erronées dans l'un de ces modules d'entrée/sortie (E/A11), sans que la perturbation ait été éliminée dans le ou les modules d'entrée/sortie identifiés comme étant défectueux ou dans le canal de transmission concerné (B1).

**2.** Procédé pour exploiter un système à ordinateurs multiples (par exemple RS1), sûr du point de vue de la technique des signaux et comportant au moins deux modules d'entrée/sortie (E/A11, E/A12), qui ne sont pas sûrs du point de vue de la technique des signaux et au moyen desquels les ordinateurs du système à ordinateurs multiples (RS1) transmettent, dans deux canaux (B1,B2), des télégrammes de données en provenance et/ou en direction d'autres ordinateurs et/ou d'autres systèmes (RS2 à RS6) recevant, délivrant ou traitant des données, et au moyen desquels les ordinateurs reçoivent ou délivrent, à partir de là, sous la forme de télégrammes dont les contenus sont identiques, pour ces modules d'entrée/sortie, des données utiles protégées par des données de contrôle,
caractérisé par le fait que

- qu'au plus tard lors de l'identification de données différentes dans ces modules d'entrée/sortie (E/A11, E/A12), le système sûr à ordinateurs multiples (par exemple RS1) soumet les données mémorisées dans ces modules, à un contrôle de redondance et détermine, à partir de là, le module d'entrée/sortie (par exemple E/A11) comportant les données erronées et le canal associé (B1),

- que le système sûr à ordinateurs multiples (RS1) bloque alors la poursuite de l'évaluation ou de la transmission de données par l'intermédiaire de ce module d'entrée/sortie (E/A11) et du canal associé (B1),

- que le système sûr à ordinateurs multiples amène alors les systèmes (RS2 à RS6), qui communiquent avec lui, à délivrer de longs télégrammes sous la forme de deux télégrammes dont les contenus sont identiques, à l'un des modules d'entrée/sortie (E/A12) qu'il exploite encore et qui sont pilotés dans l'autre canal (B2), et déclenche le contrôle de redondance des longs télégrammes provenant de ce module,

- que le système sûr à ordinateurs multiples (RS1) rassemble également, même dans le trafic avec les autres systèmes (RS2 à RS6), les données devant être transmises pour former de longs télégrammes, les retransmet aux autres systèmes (RS2 à RS6) par l'intermédiaire de l'un des modules d'entrée/sortie (E/A12) qu'il exploite encore et qui est piloté dans l'autre canal (B2), et amène ce système à exécuter un contrôle de redondance des longs télégrammes,

- que, dans le cas où les données mémorisées dans l'un des modules d'entrée/sortie (E/A12) qu'exploite encore le système sûr à ordinateurs multiples (RS1) ne sont pas respectées, ce système interrompt également la poursuite de l'évaluation ou de la transmission des données qui sont mémorisées dans ce module, et

- que le système sûr à ordinateurs multiples (RS1) interrompt la poursuite de l'évaluation et de ta transmission des données mémorisées dans l'un des modules d'entrée/sortie (E/A12), qu'il exploite, lorsqu'une durée maximale définie est écoulée à partir de la première détermination de données erronées dans l'un de ces modules d'entrée/sortie (E/A11), sans que la perturbation ait été éliminée dans le ou les modules d'entrée/sortie identifiés comme étant défectueux ou dans le canal de transmission concerné (B1).

3. Procédé suivant la revendication 1 ou 2, caractérisé par le fait que lors de ta détermination de données différentes dans les modules d'entrée/sortie (E/A11, E/A12), alimentés par des données possédant des contenus identiques, du système sûr à ordinateurs multiples (RS1) et/ou lors de la détermination d'erreurs dans les longs télégrammes, le système (RS1) sollicite au moins une transmission réitérée des données, avant le blocage permanent de l'évaluation des modules d'entrée/sortie respectivement concernés.

4. Procédé suivant ta revendication 1, 2 ou 3, caractérisé par le fait que, lors de l'identification de données différentes dans les modules d'entrée/sortie (E/A11, E/A12) occupés par les télégrammes possédant des contenus identiques, le système à ordinateurs multiples (RS1) interrompt la poursuite de l'évaluation ou de la transmission de données à partir des modules d'entrée/sortie qui interviennent respectivement dans la comparaison, lorsque les contrôles de redondance, exécutés par ce système pour les données situées dans ces modules d'entrée/sortie conduisent au résultat selon lequel les données transmises satisfont aux conditions de contrôle.

5. Procédé suivant la revendication 2 ou 3, caractérisé par le fait que lors de l'identification de données erronées dans l'un des modules d'entrée/sortie (E/A11) du système à ordinateurs multiples (RS1), ce dernier signale à la source de données (RS2), d'où proviennent les données mémorisées d'une manière erronée, celui de ces modules d'entrée/sortie (E/A21), d'où proviennent ces données, et qu'alors la source de données considérée (RS2) interrompt la poursuite de la délivrance de données par l'intermédiaire de ce module d'entrée/sortie (E/A21) et déclenche l'envoi de longs télégrammes par l'intermédiaire de l'un des modules d'entrée/sortie (E/A22), que ce système exploite encore, à un autre canal (B2) ou contrôle également, de son côté, le respect des conditions prédéterminées de redondance lors de la réception de données par l'intermédiaire de ce module d'entrée/sortie.

6. Procédé suivant la revendication 1, 2 ou 3, caractérisé par le fait que la durée maximale pour la poursuite du fonctionnement du système sûr à ordinateurs multiples (RS1) à partir de la première détermination de données erronées dans l'un des modules d'entrée/sortie (E/A11) de ce système est rendue dépendante de la durée moyenne entre pannes, à laquelle il faut s'attendre pour les modules d'entrée/sortie encore exploités, et de la redondance des données choisie après l'apparition de la perturbation.

7. Procédé suivant la revendication 1, 2 ou 3 caractérisé par le fait que les données situées dans les deux télégrammes respectifs, qui constituent les longs télégrammes et possèdent une longueur usuelle, sont représentées en étant inversées.

8. Dispositif pour la mise en oeuvre du procédé suivant au moins l'une des revendications 1 à 7, caractérisé par le fait que pour la transmission des données, il est prévu un système de bus (B1,B2) à deux canaux, que les modules d'entrée/sortie (E/A1, E/A2), qui sont prévus pour la réception des télégrammes respectifs de données possédant des contenus identiques, du système sûr à ordinateurs multiples (R1,R2) sont raccordés à différents canaux (B1 ou B2) du système de bus et que le système sûr à ordinateurs multiples (R1,R2) possède un circuit de temporisation (T1,T2), qui est sûr du point de vue de la technique des signaux et peut être réglé lors du blocage de l'évaluation, par des données mémorisées dans un module d'entrée/sortie, que l'évaluation des longs télégrammes est interrompue après l'écoulement de la durée de commutation introduite dans ce circuit et, lors de la détermination d'erreurs de transmission ou de mémorisation dans un long télégramme, on interrompt l'évaluation des données de ce télégramme.

FIG 1

FIG 2

# FIG 3

1) DATENVERGLEICH, REDUNDANZPRÜFUNG
2)
3) DATENEINGABE
4) DATENAUSGABE
5) SPERREN DER DATENAUSWERTUNG, ANFORDERN HÖHERREDUN-
   DANTER DATEN, EINSTELLEN DES ZEITGLIEDES
6) RÜCKSTELLEN DES ZEITGLIEDES
7) ABBRUCH DES DATENVERKEHRS